# EUROPÄISCHE PATENTSCHRIFT

(11) **EP 1 606 992 B1**
(45) Veröffentlichungstag und Bekanntmachung des Hinweises auf die Patenterteilung: **20.08.2008**
(21) Anmeldenummer: 05104922.9
(22) Anmeldetag: 07.06.2005
(51) Int. Cl.: A01F 15/08

(54) **Ballenpresse**
Baler
Presse à balles

(30) Priorität: 16.06.2004 DE 102004029171
(43) Veröffentlichungstag der Anmeldung: 21.12.2005
(73) Patentinhaber: DEERE & COMPANY, Moline, Illinois 61265-8098 (US)
(72) Erfinder: Chabassier, Aurélien, 70100, Broye les Loups (FR)
(74) Vertreter: Magin, Ludwig Bernhard

(56) Entgegenhaltungen:
- EP-A- 1 153 538
- DE-A1- 4 036 946
- DE-A1- 19 543 343
- US-A- 4 106 268

## Beschreibung

Die Erfindung betrifft eine Ballenpresse mit einem quaderförmigen Pressraum, in dem ein Presskolben beweglich aufgenommen wird, und dem über einen Zufuhrkanal Erntegut zugeführt wird, und mit einer Wiegeeinrichtung.

Die DE-A1-195 43 343 zeigt eine landwirtschaftliche Ballenpresse zur Herstellung quaderförmiger Großballen. Diese Ballenpresse weist eine Wiegeeinrichtung auf, die den fertig gebundenen Erntegutballen wiegt. Hierzu ist an einer Anhängevorrichtung ein Drucksensor zur Messung der Stützlast sowie am Ende des Presskanals ein Drucksensor angebracht, der das Gewicht eines sich am Ausgang des Presskanals befindlichen Ballens ermittelt. Außerdem sind am Fahrwerk der Ballenpresse Gewichtssensoren angebracht, die das Gewicht der Ballenpresse an der Achse messen. Um einen korrekten Gewichtswert für einen fertig gebundenen Ballen zu erhalten, muss die Gewichtsentlastung der Ballenpresse direkt nach der Abgabe des Ballens auf das Feld gemessen werden oder aber es ist durch entsprechende Fördereinrichtungen sicherzustellen, dass sich immer nur ein fertig gebundener Ballen auf der Abgabeeinrichtung befindet.

Die EP-A-1 153 538 zeigt eine Traktor-Ballenpressen-Kombination. Im Zufuhrkanal der Ballenpresse ist eine Sensorklappe vorgesehen, die Rückschlüsse auf die Befüllungsrate des Zufuhrkanals und somit auf den Durchfluss von biologischem Material durch die Ballenpresse ermöglicht.

Das der Erfindung zugrunde liegende Problem wird darin gesehen, dass eine derartige Wiegeeinrichtung nur dann Informationen liefert, wenn der Ballen bereits fertiggestellt ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine Ballenpresse mit einem quaderförmigen Pressraum, in dem ein Presskolben beweglich aufgenommen wird und dem über einen Zufuhrkanal Erntegut zugeführt werden kann, mit einer Wiegevorrichtung zur Verfügung gestellt, welche wirksam mit dem Zufuhrkanal verbunden ist, so dass sie das Gewicht des dem Pressraum zugeführten bzw. des in dem Zufuhrkanal angeordneten Ernteguts ermitteln bzw. messen kann, während in dem Pressraum ein Ballen gebildet oder ein fertiggestellter Ballen gebunden wird. Es ist denkbar, dass das Erntegut dem Pressraum über den Zufuhrkanal nur zugeführt wird. Vorteilhaft und üblich ist es allerdings, wenn das Erntegut in den Zufuhrkanal vorkomprimiert und im Anschluss in den Pressraum zur weiteren Verdichtung und zur Bildung eines Ballens eingebracht wird. Bei einer derartigen Ballenpresse kann es sich um eine industriell einsetzbare Ballenpresse zur Herstellung quaderförmiger Ballen, beispielsweise aus Papier, Textilien, Abfällen oder jedem anderen geeigneten Material handeln. Vorzugsweise ist die Ballenpresse aber eine landwirtschaftliche Ballenpresse, insbesondere zur Erzeugung quaderförmiger Großballen, welche sowohl an ein Zugfahrzeug anhängbar als auch selbstfahrend ausgebildet sein kann.

Der Zufuhrkanal kann mit der Ballenpresse bzw. deren Rahmen fest verbunden oder auch beweglich verbunden sein. Es kann aber auch vorgesehen sein, dass nur oder zumindest eine Bodenplatte des Zufuhrkanals mit der Ballenpresse bzw. mit deren Rahmen beweglich verbunden ist, um so mit der Wiegeeinrichtung zusammenzuwirken oder einen Bestandteil derselben zu bilden bzw. dieser zugeordnet zu sein. Die Zufuhreinrichtung bzw. die Bodenplatte kann beispielsweise beweglich mit der Ballenpresse bzw. deren Rahmen verbunden sein. Eine insbesondere bezüglich der Lagerung einfache und dabei stabile Ausgestaltung ergibt sich aber, wenn der Zufuhrkanal bzw. die Bodenplatte vorzugsweise zumindest im Wesentlichen in Richtung der Erntegutflussrichtung im Normalbetrieb der Ballenpresse einenends schwenkbar gelagert und sich andernends über eine Strebe an der Ballenpresse bzw. deren Rahmen abstützt bzw. fest gelagert ist oder sich beidseitig über Streben an der Ballenpresse bzw. deren Rahmen abstützt bzw. allgemein fest mit der Ballenpresse bzw. deren Rahmen verbunden ist. Es ist denkbar, die Wiegeeinrichtung in der Art einer konventionellen, insbesondere mechanischen Waage auszuführen. Weist die Wiegeeinrichtung allerdings wenigstens einen Sensor bzw. einen elektrischen Messwertgeber auf, so kann dieser das Gewicht des Zufuhrkanals und/oder von in dem Zufuhrkanal angeordneten Erntegut beispielsweise in analoger oder digitaler Weise erfassen. Ein derartiger Sensor kann beispielsweise Federeinrichtungen, Dehnungsmessstreifen, Lastbolzen oder jede anderer geeignete Einrichtung zur Bestimmung einer Gewichtskraft aufweisen. Ermittelt die Wiegeeinrichtung bzw. der Sensor ein Gesamtgewicht des Zufuhrkanals bzw. von Bereichen oder Teilen des Zufuhrkanals zusammen mit in dem Zufuhrkanal befindlichem Erntegut, so kann aufgrund eines bekannten Gewichts des Zufuhrkanals oder auch des/der Bauteile(s) auf das Gewicht des in dem Zufuhrkanal angeordneten Erntegutes geschlossen werden. Die Wiegeeinrichtung kann aber auch derart ausgebildet sind, dass sie das Gewicht des in dem Zufuhrkanal befindlichen Ernteguts direkt ermittelt, beispielsweise indem der Zufuhrkanal oder ein Bereich oder Bestandteil desselben einen Bestandteil der Wiegeeinrichtung bildet bzw. dieser zugeordnet ist. Dies kann beispielsweise in der Art erfolgen, dass in einem Bodenbereich des Zufuhrkanals wenigstens ein Sensor in der Art eines Dehnungsmessstreifens angeordnet ist bzw. ein derartiger Sensor die auf diesen Bodenbereich oder eine Bodenplatte des Zufuhrkanals wirkende Belastung ermittelt. Dies ist insbesondere dann günstig, wenn der Zufuhrkanal mit der Ballenpresse fest verbunden ist. Weiter oder alternativ kann eine oder beide der genannten Streben in der Art von Lastmessbolzen oder ähnlichen Sensoren ausgebildet sein, die geeignet sind, eine durch den Zufuhrkanal bzw. das in dem Zufuhrkanal angeordnete Erntegut ausgeübte Belastung zu ermitteln und somit eine Gewichtsbestimmung desselben zu ermöglichen.

Um eine Betrachtung und/oder Anzeige bzw. eine Verarbeitung und/oder Speicherung der durch die Wiegeeinrichtung ermittelten Daten zu ermöglichen, kann diese mit einer vorzugsweise elektronischen Datenverarbeitungsanlage, in der Art eines Computers, und/oder einer Steuer- bzw. Regeleinrichtung und/oder einer Anzeigeeinrichtung wirksam verbunden sein.

Die Datenverarbeitungsanlage, die Steuer- bzw. Regeleinrichtung und/oder die Anzeigeeinrichtung können räumlich unabhängig von der Ballenpresse bzw. dem Zugfahrzeug vorgesehen sein, beispielsweise indem sie mit der Ballenpresse bzw. dem Zugfahrzeug mittels drahtloser Kommunikationseinrichtungen in Verbindung stehen. Vorzugsweise ist die Datenverarbeitungsanlage, die Steuer- bzw. Regeleinrichtung und/oder die Anzeigeeinrichtung aber an der Ballenpresse bzw. an dem Zugfahrzeug vorgesehen bzw. wird durch entsprechende bereits für andere Aufgaben vorgesehene Einrichtungen gebildet bzw. ist in derartige Einrichtungen bzw. Anzeigeeinrichtungen integriert.

Die von den Sensoren bzw. der Wiegeeinrichtung gelieferten bzw. an die Datenverarbeitungsanlage weitergeleiteten bzw. dort verarbeiteten und/oder aufgezeichneten Werte können beispielsweise Informationen über ein durchschnittliches Ballengewicht, insbesondere bezogen auf einen Arbeitszyklus oder ein Feld o.ä. darstellen bzw. zur Verfügung stellen. Es können aber auch die Werte aller oder auch nur einiger Ballen ermittelt bzw. gespeichert werden. In allen Fällen sind Rückschlüsse auf den Ertrag eines Feldes und/oder pro Arbeitszyklus möglich.

Es ist möglich, die Bildung des Ballens in dem Pressraum beispielsweise durch eine optische Einrichtung, eine Ballenlängenermittlungseinrichtung, eine Überwachung des Ballenvorschubs etc. zu überwachen bzw. anhand derart gelieferter Daten einen Status der Ballenbildung zu ermitteln bzw. die Ballenbildung und/oder -bindung zu steuern oder zu regeln. Die Steuer- bzw. Regeleinrichtung kann den Status der Ballenbildung aber auch anhand einer Anzahl an Hüben des Presskolbens und/oder des Ladegabelzusammenbaus ermitteln. Durch die von der Wiegeeinrichtung zur Verfügung gestellten Gewichtsdaten, welche Informationen über die Menge an Erntegut in dem Zufuhrkanal und somit über die Menge an Erntegut, die durch einen Hub des Ladegabelzusammenbaus in den Pressraum eingebracht wird, ermöglicht, stehen der Steuer- und Regeleinrichtung Informationen darüber zur Verfügung, welche Menge an Erntegut sich in dem Pressraum befindet bzw. welche Größe der zu bildende Ballen erreicht hat. Ebenso kann dass Gewicht des in dem Pressraum befindlichen Ballens bzw. eines fertiggestellten Ballens aufgrund der Anzahl der Hübe des Presskolbens und/oder des Zufuhrgabelzusammenbaus in Verbindung mit den von der Wiegeeinrichtung zur Verfügung gestellten Gewichtsdaten ermittelt werden. Es ist aber auch eine Kombination mit konventionellen Einrichtungen wie Längenmesseinrichtungen, beispielsweise in der Art eines Sternrades, oder Wiegeeinrichtungen, welche beispielsweise an einer Auswurfeinrichtung oder auch in dem Pressraum vorgesehen sein können, möglich.

Die gelieferten Gewichtsdaten bzw. Ausgabewerte können durch die elektronische Datenverarbeitungsanlage darüber hinaus unter In-Betracht-Ziehen beispielsweise der Erntegutart oder anderer Umgebungskennwerte, wie dem Reifegrad etc. und/oder einer Erntegutfeuchte beurteilt werden. Die Erntegutfeuchte kann durch einen Feuchtesensor ermittelt werden, welcher insbesondere an der Ballenpresse bzw. in dem Pressraum oder auch einem Zufuhrkanal etc. vorgesehenen Feuchtesensor ermittelt werden; es ist aber auch möglich, die Feuchte zentral und unabhängig von der Ballenpresse oder auch durch Stichproben zu ermitteln.

Aufgrund der Feuchte und den Ausgabewerten bzw. dem Ballengewicht kann ein Anteil an Trockenmaterial bezogen auf den insbesondere fertigen Ballen oder auch bezogen auf eine vorgegebene oder wählbare Anzahl von insbesondere fertigen Ballen ermittelt werden. Derartige Daten können beispielsweise zur Beurteilung des Ertrags oder für die weitere Behandlung, beispielsweise Lagerung herangezogen werden.

Wirkt die Datenverarbeitungsanlage mit einem Positionsbestimmungssystem zusammen, können Ausgabewerte, ein (auch gemitteltes) Ballengewicht, und/oder Ertragsdaten einer bestimmten Position bzw. einem Bereich zugeordnet werden, wodurch es möglich wird, eine Ertragskartierung vorzunehmen. Bei dem Positionsbestimmungssystem handelt es sich vorzugsweise um ein satellitengestütztes Positionsbestimmungssystem, wie es häufig mit dem Begriff GPS (Global Positioning System) benannt wird. Es sind aber auch andere Positionsbestimmungssysteme, insbesondere ohne die Verwendung von Satelliten, beispielsweise unter Verwendung stationärer Referenzpunkte möglich. Die Datenverarbeitungsanlage kann auch einen Bestandteil eines Positionsbestimmungssystems bilden.

Die Steuer- bzw. Regeleinrichtung kann auch wenigstens eine Funktion der Ballenpresse und/oder eines mit der Ballenpresse verbundenen bzw. verbindbaren Zugfahrzeugs in Abhängigkeit von einem oder mehreren von der Wiegeeinrichtung zur Verfügung gestellten Ausgabewert(en) steuern bzw. regeln. Insbesondere kann die Steuer- bzw. Regeleinrichtung die Funktion des Ladegabelzusammenbaus beispielsweise derart steuern, dass dieser dann eine Portion Erntegut in den Pressraum einbringt, wenn der Zufuhrkanal bzw. das in dem Zufuhrkanal angeordnete Erntegut ein vorgegebenes Gewicht erreicht hat. Darüber hinaus ist es denkbar, dass eine Verdichtergabel, das Erntegut in Abhängigkeit von den von der Wiegeeinrichtung ermittelten Daten in dem Zufuhrkanal mehr oder weniger stark verdichtet. Weiter kann beispielsweise die Geschwindigkeit des Zugfahrzeugs derart beeinflusst werden, dass diese beispielsweise erhöht wird, wenn die Wiegeinrichtung oder die Steuer- bzw. Regeleinrichtung bzw. die Datenverarbeitungsanlage ein zu geringes Gewicht des Zufuhrkanals bzw. des in ihm angeordneten Ernteguts, ein zu geringes Gewicht des letzten oder mehrerer zuletzt durch den Ladegabelzusammenbau in den Pressraum eingebrachten Erntegutportion oder auch einen zu geringen Gewichtsanstieg in dem Zufuhrkanal bezogen auf eine Zeitdauer ermittelt. Auch andere geeignete Steuerungen oder Reglungen bzw. die Steuer- oder Regelung weiterer oder mehrerer Funktionen auch in Abhängigkeit voneinander oder mit Bezug auf weitere durch andere Messeinrichtungen bzw. Sensoren ermittelte Daten ist möglich.

Für eine derartige Steuer- bzw. Regelung verwendbare Vorgabewerte können durch eine Bedienungsperson manuell, beispielsweise zu Beginn eines Arbeitseinsatzes oder -tages in die Datenverarbeitungs- und/oder die Steuer- bzw. Regelungseinrichtung eingegeben werden. Die Steuer- bzw. Regelungseinrichtung bzw. die Datenverarbeitungsanlage kann aber auch auf vorzugsweise in tabellarischer Art und Weise gespeicherte Vorgabewert zurückgreifen. Derartige Vorgabewerte können beispielsweise dazu verwendet werden, anhand der ermittelten Gewichtsdaten auf das Volumen des Erntegutes schließen zu können, so dass der fertiggestellte Erntegutballen beispielsweise ein vorgegebenes Volumen aufweist oder allgemein um eine passende Funktionssteuerung oder -regelung auszuwählen.

Hierzu kann der Vorgabewert bzw. können die Vorgabewerte einem oder auch mehrere manuell oder automatisch auswählbarem(n) Ernte- bzw. Umgebungsfaktor(en) zugeordnet sein bzw. werden. Das Gewicht des Erntegutes bzw. einer in den Pressraum einzubringenden Portion an Erntegut bzw. das Gewicht des Erntegutes mit Bezug auf sein Volumen o.ä. kann beispielsweise von der Erntegutart, der Erntegutfeuchte, des Reifegrades etc. abhängen und muss bzw. kann zur Steuerung bzw. Regelung der Ballenpresse bzw. des Zugfahrzeugs bzw. zur Beurteilung und Verarbeitung der durch die Wiegeeinrichtung ermittelten Daten herangezogen werden.

In der Zeichnung ist ein nachfolgend näher beschriebenes Ausführungsbeispiel der Erfindung dargestellt. Die einzige Figur zeigt eine Ballenpresse zur Herstellung zumindest im Wesentlichen quaderförmiger Großballen, welche eine Wiegeeinrichtung zur Bestimmung des Ballengewichts aufweist.

Es wird eine Ballenpresse 10 in der Art einer Großballenpresse zum Herstellen quaderförmiger Ballen gezeigt, die einen Rahmen 12 aufweist, der auf Bodenstützrädern 14 in Tandemanordnung abgestützt ist. An den Rahmen 12 ist eine Deichsel 16 angeschlossen, welche sich von diesem aus nach vorn erstreckt und so ausgebildet ist, dass sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Ballenpresse 10 zu liefern. Ein Pressraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpressraum dient, wie dies nachfolgend beschrieben wird. Eine Aufnahmevorrichtung 28 in der Art einer Pick-up und mit einer zur Mitte fördernden Schnecke ist vor dem Zufuhrkanal 26 angeordnet, um ein Schwad von Erntegut vom Boden aufzuheben und es an eine Verdichtergabel 30 abzugeben, die dazu dient, Erntegut in dem Zufuhrkanal 26 zu verdichten, bis sich eine Ladung von vorgewählter Dichte in dem Zufuhrkanal 26 angesammelt hat und mittels eines Ladegabelzusammenbaus 36 über den Guteinlass 24 in den Pressraum 18 hineingestopft wird. An einer vorderen unteren Stelle des Zufuhrkanals 26 ist eine federbelastete Klappe bzw. ein Mittel 38 schwenkbar montiert, das in Abhängigkeit von sich in dem Zufuhrkanal 26 befindlichem Erntegut schwenkt, und anzeigt, dass eine gewünschte Pressgutdichte in dem Zufuhrkanal 26 erreicht ist, um die Bestromung eines elektrischen Steuerkreislaufs (nicht gezeigt) zu bewirken, der entsprechende Antriebsverbindungen herstellt, die den Ladegabelzusammenbau 36 derart aktiviert, dass er die Ladung des Ernteguts in den Pressraum 18 bewegen kann.

Wenn die Ladung des Ernteguts in den Pressraum 18 eingebracht wurde, wird ein Kolbenmechanismus 40, der vor dem Rahmen 12 angeordnet ist, in einer gesteuerten Reihenfolge nach dem Ladegabelzusammenbau 36 betätigt, um das Erntegut nach hinten in den Pressraum 18 zu bewegen, wo es in einem Stapel verdichtet wird, wie dies im Stand der Technik gut bekannt ist. Nachdem der Stapel von verdichtetem Material eine vorgewählte Länge erreicht hat, wird eine Bindeeinrichtung betätigt. Diese Bindeeinrichtung weist einen Nadelzusammenbau 42 zum Liefern von Bindegarn auf, der mehrere gekrümmte Nadeln enthält, um mehrere Garnstränge einer entsprechenden Anzahl nicht gezeigter Knoter zuzuführen, die so wirken, dass sie Garnlängen um die vorgewählte Länge der Stapel legen, um einen Ballen 44 zu bilden, der zum Entladen fertig ist, was dann geschieht, wenn er von einem Ballenteil aus dem rückwärtigen Endbereich des Pressraums 18 herausgedrückt wird, wenn er in seiner Länge zunimmt, weil neue Ladungen von Erntegut in den Pressraum 18 gestopft werden.

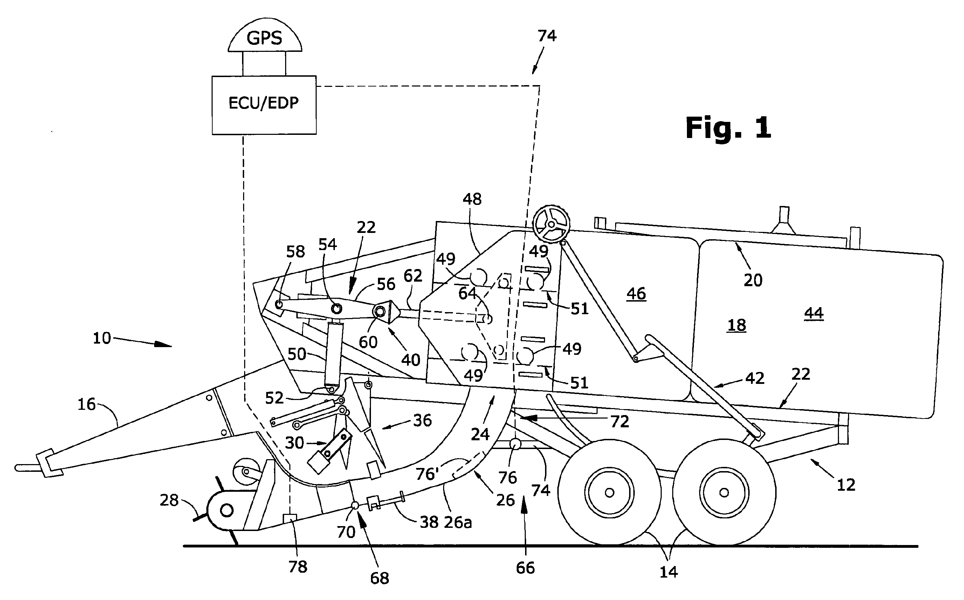

Mit Bezug auf die Einzelheiten des Kolbenmechanismus 40 ist zu erkennen, dass letzterer einen Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 (sh. Figur 1) angeordnet ist. Diese Bewegung des Presskolbens 48 hat zum Ergebnis, dass Ladungen von Erntegut, die aus dem Zufuhrkanal 26 in den Pressraum 18 eingeführt werden, gegen einen Stapel von Erntegut verdichtet werden, was einen teilweise gebildeten Ballenteil 44 und/oder den kompletten Ballen 46 einschließt.

Der Presskolben 48 ist mit mehreren drehbaren Führungsmitteln 49 versehen, welche mit entsprechenden in dem Pressraum 18 vorgesehenen Führungen 51, die hier nur andeutungsweise dargestellt sind, zusammenwirken, um den Presskolben 48 in dem Pressraum 18 zu führen und um so eine gleichmäßige und verschleißarme Bewegung des Presskolbens 48 zu begünstigen. Vorliegend sind exemplarisch Führungsmittel 49 andeutungsweise dargestellt, welche in der Art von Laufrollen ausgebildet sind und sich quer zu der Bewegungsrichtung des Presskolbens 48 erstrecken. Es kann aber auch eine geringere oder größere Anzahl an Führungsmitteln 49 vorgesehen sein, wobei diese auch in der Art von Rollen- oder Kugel oder auch von Gleitlagern oder anderer geeigneter Mittel ausgebildet sein können. Die Führungsmittel 49 können den Presskolben 48 zusätzlich oder alternativ auch quer zu seiner Bewegungsrichtung bzw. anderweitig, beispielsweise diagonal, führen. Die Führungsmittel 49 können entgegen der vorliegenden Darstellung auch in einem Mittenbereich des Presskolbens 48 und/oder in einer oder mehreren vertikal und/oder horizontal beabstandeten Reihe angeordnet sein.

Der Kolbenmechanismus 40 enthält weiterhin einen als aus- und einfahrbare Betätigungsvorrichtung ausgebildeten Antrieb 50, der hier als eine doppeltwirkende Hydraulikzylinder-KolbenEinheit dargestellt ist, deren Zylinderende mit einem Bolzen 52 schwenkbar an den Rahmen 12 an einer Stelle oberhalb der Verdichtergabel 30 verankert ist. Das kolbenseitige Ende des Antriebs 50 ist an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des ersten Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64 mit dem Presskolben 48 verbunden ist. Es wird hier darauf hingewiesen, dass die verbindenden Bolzen der Lagerstellen 58 und 64 entlang einer Linie von Zentren angeordnet sind, die entlang oder ungefähr entlang einer mittigen Längsachse des Pressraums 18 liegt. Dies hat zum Ergebnis, dass die Reaktionskraft des Ernteguts, das auf den Presskolben 48 wirkt, im Wesentlichen von dem Antrieb 50 genommen wird, wenn sich der erste und der zweite Lenker 56 und 62 entlang einer Linie befinden, wie dies der Fall ist, wenn sich der Presskolben 48 in seiner rückwärtigen Endstellung befindet. Es wird weiterhin darauf hingewiesen, dass die beiden Lenker 56 und 62 jeweils als ein Paar in der Querrichtung einen Abstand zueinander aufweisender Lenker ausgebildet sein könnten. Der Antrieb 50 würde dann an der Verbindungsstelle 54 (Bolzen) an einer Stelle zwischen dem Paar von Lenkern 56 angeschlossen werden, die den ersten Lenker 56 bilden. Es wird daher erkannt, dass der Presskolben 48 den Gleiter eines Gleitkurbelmechanismus bildet, der einen ersten Lenker 56 als Kurbelarm und einen zweiten Lenker 62 als Pleuelstange enthält. Obwohl sich das von den Lenkern 56 und 62 gebildete Gestänge nicht über eine Totpunktstellung hinausbewegt, könnte es als ein Kniemechanismus oder Kniegelenk bezeichnet werden. Wenn auch das bevorzugte Ausführungsbeispiel einen Antrieb 50 zeigt, der an den ersten Lenker 56 an einer Stelle zwischen gegenüberliegenden Enden des ersten Lenkers 56 angeschlossen ist, könnte des Weiteren der Antrieb an irgendeiner Stelle zwischen der Lagerstelle 58 und der Lagerstelle 64 angeschlossen werden, zum Beispiel könnte der Antrieb 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Presskolben 48 angeschlossen ist.

Weitere Einzelheiten dieser Ballenpresse 10 sind in der EP-A2-0 940 072 beschrieben, deren Offenbarung hierin einbezogen wird. Es wird darauf hingewiesen, dass anstelle des dort beschriebenen speziellen Antriebs mit einem Hydraulikmotor ein herkömmlicher Kurbeltrieb verwendet werden könnte.

Im Folgenden wird nun der Zufuhrkanal 26 nochmals genauer betrachtet, mit dem eine Wiegeeinrichtung zusammenwirkt. Der Zufuhrkanal weist eine Bodenplatte 26a auf, welche an ihrem der Aufnahmevorrichtung zuwandten Endbereich 68 an der Ballenpresse 10 mittels eines Lagers 70 schwenkbar angebracht ist. Der gegenüberliegende Endbereich 72 der Bodenplatte 72 stützt sich an dem Rahmen der Ballenpresse mittels einer Strebe 74 ab, welche einen Sensor 76 zur Ermittlung der auf die Strebe wirkende Belastung durch die Bodenplatte 26a bzw. auf dieser lastenden bzw. in dem Zufuhrkanal 26 angeordneten Menge an Erntegut aufweist. Die Strebe 74 kann beispielsweise in der Art eines Lastmessbolzens und der Sensor 76 in der Art eines Dehnungsmessstreifens ausgebildet sein. Die Bodenplatte 62 könnte sich auch in beiden Endbereichen 68, 72 über derartige Streben an der Ballenpresse 10 bzw. deren Rahmen abstützten, wobei eine oder zwei bzw. mehrere Streben mit jeweiligen Sensoren versehen sein können. Es ist auch möglich, einen zusätzlichen oder alternativen Sensor 76' vorzusehen, welcher in der Figur in unterbrochenen Linien dargestellt ist, welcher die Belastung der Bodenplatte 26a, durch das in dem Zufuhrkanal 26 angeordnete Erntegut ermittelt.

Der Sensor 76 (oder 76') steht mit einer vorzugsweise elektronischen Steuer- bzw. Regeleinrichtung ECU in Verbindung, welche wiederum mit einer elektronischen Datenverarbeitungsanlage EDP zusammenwirken bzw. eine derartige aufweisen kann. Der Sensor 76, 76' liefert seine Ausgabewerte an die Steuer- bzw. Regeleinrichtung ECU, welche diese verarbeitet und beispielsweise anhand der ermittelten Belastung das Gewicht der in dem Zufuhrkanal 26 befindlichen Erntegutmenge ermittelt.

Die Datenverarbeitungsanlage EDP bzw. die Steuer- bzw. Regeleinrichtung ECU kann sowohl an der Ballenpresse 10 oder an einem Zugfahrzeug vorgesehen sein bzw. durch eine elektronische Datenverarbeitungsanlage EDP/Steuer- bzw. Regeleinrichtung ECU gebildet werden, welche bereits an der Ballenpresse 10 oder dem Zugfahrzeug vorgesehen ist.

Die Steuer- bzw. Regeleinrichtung ECU steuert bzw. regelt unter anderem die Funktion der Verdichtergabel 30 sowie des Ladegabelzusammenbaus 36, wobei insbesondere die Funktion des Ladegabelzusammenbaus 36 in Abhängigkeit von den durch die Wiegeeinrichtung 66 zur Verfügung gestellten Daten bzw. Ausgabewerten beispielsweise in der Art erfolgen kann, dass eine Portion von Erntegut durch den Ladegabelzusammenbau 36 bei Erreichen eines Vorgabewertes in den Pressraum 18 einbringt, der beispielsweise das Gewicht des Erntegutes unter Bezugnahme von Größen, welche beispielsweise die Erntegutart oder die Erntegutfeuchte wiederspiegeln, wiedergibt. Auf diese Weise könnte auf die Mittel 38 verzichtet werden; diese können aber auch zusätzlich vorgesehen sein.

Die Datenverarbeitungsanlage EDP kann aufgrund der Ausgabewerte der Wiegeeinrichtung 66 darüber hinaus das Gewicht des sich in Pressraum 18 befindenden Ernteguts oder auch unter Zuhilfenahme einer Zeitmessung oder unter Heranziehen der Anzahl an Hüben des Presskolbens 48 und/oder des Ladegabelzusammenbaus 36 (und somit der Anzahl in den Pressraum 18 eingebrachter Erntegutportionen bekannten Gewichts), welche insbesondere seit dem letzten Ballenauswurf und/oder letzten Ballenbildung aufgetreten sind, das Gewicht des sich bildenden bzw. eines fertiggestellten Ballens ermitteln, wobei die Fertigstellung des Ballens beispielsweise durch die Aktivierung einer Bindeeinrichtung repräsentiert werden kann.

Die Ausgabedaten bzw. -werte, das Gewicht einer in den Pressraum 18 eingeführten Erntegutportion des in dem Zufuhrkanal 26 angeordneten Erntegutes, der Status des zu bildenden Ballens, ermittelte Ertragsdaten etc. kann/können mittels einer nicht gezeigten Anzeige an dem Zugfahrzeug oder der Ballenpresse 10 angezeigt werden. Darüber hinaus kann vorgesehen sein, dass die Datenverarbeitungsanlage EDP/Steuer- bzw. Regeleinrichtung ECU alle oder einige der genannten Daten, insbesondere unter Zuhilfenahme einer zeitlichen Bezugsgröße speichert. Die Datenverarbeitungsanlage EDP kann beispielsweise ein gemitteltes Ballengewicht für ein Feld oder einen Feldabschnitt ermitteln, in dem sie für eine bestimmte oder wählbare Ballenanzahl einen Mittelwert bildet. Weiter kann die Art des Erntegutes bei der Beurteilung des Ballengewichts oder dessen Auswertung herangezogen werden.

Im Bereich der Aufnahmevorrichtung 28 ist darüber hinaus ein Feuchtesensor 78 vorgesehen. Dieser ist allerdings nicht zwingend notwendig bzw. kann beispielsweise auch in dem Pressraum 18 oder an einer anderen Stelle der Ballenpresse 10 oder des Zugfahrzeugs vorgesehen sein. Die Feuchte kann auch stichprobenartig unabhängig von der Ballenpresse 10 oder dem Zufahrzeug ermittelt werden. Die ermittelte Feuchte bzw. die durch den Feuchtesensor 78 gelieferten Feuchtewerte können beispielsweise dazu herangezogen werden, unter Verwendung des Ballengewichts bzw. der Ausgabedaten einen Anteil an trockenem Material pro Ballen 46 oder auch einen derartigen gemittelten Wert für alle oder eine bestimmte oder wählbare Zahl von Ballen 46 zu ermitteln. Die Feuchte kann auch herangezogen werden, um wie oben angesprochen eine oder mehrere Funktionen der Ballenpresse 10, beispielsweise des Ladegabelzusammenbaus 36, in Abhängigkeit von den durch die Wiegeeinrichtung 66 zur Verfügung gestellten Ausgabewerte zu steuern oder auch um ein diesen Ausgabewerten bzw. dem Gewicht des Erntegutes zuzuordnendes Volumen zu bestimmen.

Darüber hinaus kann die Datenverarbeitungsanlage EDP mit einem Positionsbestimmungssystem GPS zusammen arbeiten , welches die Position der Ballenpresse 10 bzw. des Zugfahrzeugs auf dem Feld bestimmen kann. Bei dem Positionsbestimmungssystem GPS handelt es sich vorzugsweise um ein satellitengestütztes Positionsbestimmungssystem (Global Positioning System). Mit Hilfe des Positionsbestimmungssystems GPS und der das Ballengewicht repräsentierenden Ausgabedaten der Wiegeeinrichtung 66, der Sensoren 76, 76', 78 bzw. der Datenverarbeitungsanlage EDP kann ein Ertrag bezogen auf einen bestimmten Bereich des jeweiligen Feldes ermittelt bzw. eine Ertragskartierung vorgenommen werden, anhand der beispielsweise auszubringenden Düngermengen, Pestizid- oder Fungizidmengen etc. festgelegt werden können.

Die vorliegende Erfindung kann an jeder bekannten Ballenpresse zur Herstellung zumindest im Wesentlichen quaderförmiger Großballen eingesetzt werden, insbesondere auch an solchen Ballenpressen, deren Ladegabelzusammenbau 36 und/oder Verdichtergabel 30 nicht wie dargestellt hydraulisch sondern in konventioneller Art und Weise mechanisch bewegt bzw. gesteuert wird.

## Patentansprüche

1. Ballenpresse (10) mit einem quaderförmigen Pressraum (18), in dem ein Presskolben (48) beweglich aufgenommen wird und dem über einen Zufuhrkanal (26) Erntegut zugeführt werden kann, und mit einer eine Einrichtung zur Bestimmung einer Gewichtskraft aufweisenden Wiegeeinrichtung (66), **dadurch gekennzeichnet, dass** die Wiegeeinrichtung (66) derart wirksam mit dem Zufuhrkanal (26) verbunden ist, dass sie das Gesamtgewicht des Zufuhrkanals (26) bzw. von Bereichen oder Teilen des Zufuhrkanals (26) zusammen mit in dem Zufuhrkanal (26) befindlichem Erntegut oder das Gewicht von in dem Zufuhrkanal (26) angeordnetem Erntegut ermitteln kann.

2. Ballenpresse nach Anspruch 1 oder 2, **dadurch gekennzeichnet, dass** die Wiegeeinrichtung (66) wenigstens einen Sensor (76, 76') aufweist, der das Gewicht von in dem Zufuhrkanal (26) angeordneten Erntegut und/oder eine durch diese ausgeübte Belastung ermitteln kann und insbesondere in der Art einer Kraftmesseinrichtung und/oder einer Drehmomentmesseinrichtung ausgebildet ist.

3. Ballenpresse nach einem oder mehreren der vorherigen Ansprüche, **dadurch gekennzeichnet, dass** die Wiegeeinrichtung (66) mit einer vorzugsweise elektronischen Datenverarbeitungsanlage (EDP) und/oder Steuer- und/oder Regeleinrichtung (ECU) und/oder einer Anzeigeeinrichtung wirksam verbunden ist.

4. Ballenpresse nach Anspruch 3, **dadurch gekennzeichnet, dass** die Datenverarbeitungsanlage EDP und/oder die Steuer-und/oder Regeleinrichtung (ECU) und/oder die Anzeigeeinrichtung an der Ballenpresse (10) bzw. an einem Zugfahrzeug vorgesehen ist.

5. Ballenpresse nach einem oder mehreren der Ansprüche 3 oder 4, **dadurch gekennzeichnet, dass** die Datenverarbeitungsanlage (EDP) anhand von der Wiegeeinrichtung (66) zur Verfügung gestellten Daten ein Ballengewicht bzw. das Gewicht eines fertig gestellten Ballens (46) und/oder ein mittleres Ballengewicht für mehrerer fertiggestellte Ballen (46) bestimmt.

6. Ballenpresse nach einem oder mehreren der Ansprüche 3 bis 5, **dadurch gekennzeichnet, dass** die elektronische Datenverarbeitungsanlage (EDP) die Ausgabewerte bzw. das ermittelte Gewicht unter Heranziehen einer Erntegutart, der vorzugsweise durch einen insbesondere an der Ballenpresse (10) bzw. in dem Zufuhrkanal (26) oder an diesen angrenzend vorgesehenen Feuchtesensor (78) ermittelten Erntegutfeuchte und/oder wenigstens einem Ernte- und/oder Umgebungskennwert beurteilt.

7. Ballenpresse nach Anspruch 6, **dadurch gekennzeichnet, dass** aufgrund der Ausgabewerte bzw. des Ballengewichts einen Anteil an Trockenmaterial bezogen auf den insbesondere fertigen Ballen (46) oder eine vorgegebene oder wählbare Anzahl von insbesondere fertigen Ballen (46) ermittelt.

8. Ballenpresse nach einem oder mehreren der Ansprüche 3 bis 7, **dadurch gekennzeichnet, dass** die Steuer- bzw. Regeleinrichtung (ECU) bzw. die Datenverarbeitungsanlage (EDP) einen Status der Ballenbildung in dem Pressraum (18) und/oder ein Ballengewicht eines insbesondere fertiggebundenen Ballens (44) insbesondere anhand einer Anzahl an Hüben des Presskolben (48) und/oder des Ladegabelzusammenbaus (36) ermittelt.

9. Ballenpresse nach einem oder mehreren der Ansprüche 3 bis 8, **dadurch gekennzeichnet, dass** die elektronische Datenverarbeitungsanlage (EDP) mit einem Positionsbestimmungssystem (GPS), vorzugsweise einem satellitengestützten Positionsbestimmungssystem (Global Positioning System), insbesondere zur Zuordnung eines Ballengewichts, von Ausgabewerten und/oder eines Ertrags zu einer bestimmten Position und/oder einem Bereich und/oder zur Ertragskartierung zusammenwirkt, verbunden ist und/oder einen Bestandteil eines derartigen Systems bildet.

10. Ballenpresse nach einem oder mehreren der Ansprüche 3 bis 9, **dadurch gekennzeichnet, dass** die Steuer- bzw. Regeleinrichtung (ECU) wenigstens eine Funktion der Ballenpresse (10) und/oder eines mit der Ballenpresse (10) verbundenen bzw. verbindbaren Zugfahrzeugs, insbesondere die Zufuhreinrichtung bzw. eine Bewegung des Ladegabelzusammenbaus (36) und/oder der Verdichtergabel (30) in Abhängigkeit von einem oder mehreren von der Wiegeeinrichtung (66) zur Verfügung gestellten Ausgabewert(en) steuert bzw. regelt.

11. Ballenpresse nach Anspruch 10, **dadurch gekennzeichnet, dass** die Steuer- bzw. Regeleinrichtung (ECU) den/die Ausgabewert(e) mit zumindest einem vorzugsweise durch die Steuer- bzw. Regeleinrichtung (ECU) bzw. die Datenverarbeitungsanlage (EDP) beispielsweise in tabellarischer Art und Weise gespeicherten Vorgabewert vergleicht bzw. in Beziehung setzt.

12. Ballenpresse nach Anspruch 11, **dadurch gekennzeichnet, dass** der Vorgabewert wenigstens einem manuell oder automatisch auswählbaren Ernte- und/oder Umgebungsfaktor(en) vorzugsweise zumindest der Erntegutart und/oder der Erntegutfeuchte zugeordnet ist bzw. zugeordnet werden kann.

## Claims

1. Baler (10) with a cuboidal baling chamber (18) in which a baling piston (48) is movably accommodated and which can be supplied with crop via a supply channel (26), and with a weighing device (66) which has a device for determining a weight, **characterized in that** the weighing device (66) is operatively connected to the supply channel (26) in such a manner that it can determine the overall weight of the supply channel (26) or of regions or parts of the supply channel (26) together with crop located in the supply channel (26), or can determine the weight of crop arranged in the supply channel (26).

2. Baler according to Claim 1 or 2, **characterized in that** the weighing device (66) has at least one sensor (76, 76') which can determine the weight of crop arranged in the supply channel (26) and/or a loading exerted by said crop, and is designed in particular in the manner of a force-measuring device and/or a torque-measuring device.

3. Baler according to one or more of the preceding claims, **characterized in that** the weighing device (66) is operatively connected to a preferably electronic data processing system (EDP) and/or control and/or regulating device (ECU) and/or a display device.

4. Baler according to Claim 3, **characterized in that** the data processing system (EDP) and/or the control and/or regulating device (ECU) and/or the display device is provided on the baler (10) and/or on a towing vehicle.

5. Baler according to one or more of Claims 3 and 4, **characterized in that** the data processing system (EDP) determines a bale weight and/or the weight of a completed bale (46) and/or an average bale weight for a plurality of completed bales (46) using data provided by the weighing device (66).

6. Baler according to one or more of Claims 3 to 5, **characterized in that** the electronic data processing system (EDP) assesses the output values and/or the determined weight taking into consideration a type of crop, the crop moisture, which is preferably determined by means of a moisture sensor (78) provided in particular on the baler (10) or in the supply channel (26) or adjacent to the latter, and/or at least one characteristic value of the crop and/or surroundings.

7. Baler according to Claim 6, **characterized in that** a dry material portion, with reference to the in particular finished bales (46) or a predetermined or selectable number of in particular finished bales (46), is determined on the basis of the output values or the bale weight.

8. Baler according to one or more of Claims 3 to 7, **characterized in that** the control and/or regulating device (ECU) and/or the data processing system (EDP) determines a status of the bale formation in the baling chamber (18) and/or a bale weight of an in particular completed bale (44), in particular with reference to a number of strokes of the baling piston (48) and/or of the loading fork assembly (36).

9. Baler according to one or more Claims 3 to 8, **characterized in that** the electronic data processing system (EDP) interacts with or is connected to a position-determining system (GPS), preferably with a satellite-assisted position-determining system (global positioning system), in particular in order to assign a bale weight, output values and/or a yield to a certain position and/or to a region and/or to the yield mapping, and/or forms part of a system of this type.

10. Baler according to one or more of Claims 3 to 9, **characterized in that** the control and/or regulating device (ECU) controls and/or regulates at least one function of the baler (10) and/or of a towing vehicle which is connected or can be connected to the baler (10), in particular the supply device or a movement of the loading fork assembly (36) and/or of the compression fork (30) as a function of one or more output values provided by the weighing device (66).

11. Baler according to Claim 10, **characterized in that** the control and/or regulating device (ECU) compares and/or relates the output value(s) to at least one specified value preferably stored, for example in tabular form, by the control and/or regulating device (ECU) and/or the data processing system (EDP).

12. Baler according to Claim 11, **characterized in that** the specified value is assigned or can be assigned to at least one manually or automatically selectable crop and/or surroundings factor, preferably at least to the type of crop and/or the crop moisture.

## Revendications

1. Presse à balles (10) avec une chambre de presse parallélépipédique (18), qui contient un piston de presse mobile (48) et à laquelle une matière récoltée peut être envoyée par un canal d'alimentation (26), et avec un dispositif de pesage (66) comprenant un dispositif pour déterminer un poids, **caractérisée en ce que** le dispositif de pesage (66) est activement relié au canal d'alimentation (26) de telle manière qu'il puisse déterminer le poids total du canal d'alimentation (26) ou le poids de zones ou de parties du canal d'alimentation (26) avec la matière récoltée se trouvant dans le canal d'alimentation (26) ou le poids de la matière récoltée disposée dans le canal d'alimentation (26).

2. Presse à balles selon la revendication 1, **caractérisée en ce que** le dispositif de pesage (66) comprend au moins un capteur (76, 76'), qui peut déterminer le poids de matière récoltée disposée dans le canal d'alimentation (26) et/ou une charge exercée par celle-ci et qui est réalisé en particulier sous la forme d'une dispositif de mesure de force et/ou d'un dispositif de mesure de couple.

3. Presse à balles selon une ou plusieurs des revendications précédentes, **caractérisée en ce que** le dispositif de pesage (66) est activement relié à une installation, de préférence électronique, de traitement de données (EDP) et/ou à un dispositif de commande et/ou de régulation (ECU) et/ou à un dispositif d'affichage.

4. Presse à balles selon la revendication 3, **caractérisée en ce que** l'installation de traitement de données (EDP) et/ou le dispositif de commande et/ou de régulation (ECU) et/ou le dispositif d'affichage est prévu sur la presse à balles (10) ou sur un véhicule tracteur.

5. Presse à balles selon une ou plusieurs des revendications 3 ou 4, **caractérisée en ce que** l'installation de traitement de données (EDP) détermine, à l'aide de données fournies par le dispositif de pesage (66), un poids de balle ou le poids d'une balle terminée (46) et/ou un poids de balle moyen pour plusieurs balles terminées (46).

6. Presse à balles selon une ou plusieurs des revendications 3 à 5, **caractérisée en ce que** l'installation électronique de traitement de données (EDP) évalue les valeurs de sortie ou le poids déterminé en tenant compte d'une nature de matière récoltée, de l'humidité de la matière récoltée déterminée de préférence par un capteur d'humidité (78) prévu en particulier sur la presse à balles (10) ou dans le canal d'alimentation (26) ou adjacent à celui-ci et/ou d'au moins un paramètre de la récolte et/ou de l'environnement.

7. Presse à balles selon la revendication 6, **caractérisée en ce que** l'on détermine, sur la base des valeurs de sortie ou du poids des balles, une proportion de matière sèche rapportée en particulier aux balles terminées (46) ou à un nombre prédéterminé ou sélectionnable en particulier de balles terminées (46).

8. Presse à balles selon une ou plusieurs des revendications 3 à 7, **caractérisée en ce que** le dispositif de commande ou de régulation (ECU) ou l'installation de traitement de données (EDP) détermine un état de la formation de balle dans la chambre de presse (18) et/ou un poids de balle en particulier d'une balle liée terminée (44) en particulier à l'aide d'un nombre de courses du piston de presse (48) et/ou de l'ensemble de fourches de chargement (36).

9. Presse à balles selon une ou plusieurs des revendications 3 à 8, **caractérisée en ce que** l'installation électronique de traitement de données (EDP) coopère avec un système de détermination de position (GPS), de préférence un système de détermination de position assisté par satellite (Global Positioning System), en particulier pour associer un poids de balle, des valeurs de sortie et/ou un rendement à une position déterminée et/ou à une zone et/ou une carte du rendement, est raccordée et/ou forme un élément d'un tel système.

10. Presse à balles selon une ou plusieurs des revendications 3 à 9, **caractérisée en ce que** le dispositif de commande ou de régulation (ECU) commande ou régule au moins une fonction de la presse à balles (10) et/ou d'un véhicule tracteur relié ou pouvant être relié à la presse à balles (10), en particulier le dispositif d'alimentation ou un mouvement de l'ensemble de fourches de chargement (36) et/ou des fourches de compression (30) en fonction d'une ou de plusieurs valeur(s) de sortie fournie(s) par le dispositif de pesage (66).

11. Presse à balles selon la revendication 10, **caractérisée en ce que** le dispositif de commande ou de régulation (ECU) compare ou met en rapport la (les) valeur(s) de sortie avec au moins une valeur prédéterminée mémorisée, par exemple sous forme de table, de préférence par le dispositif de commande ou de régulation (ECU) ou l'installation de traitement de données (EDP).

12. Presse à balles selon la revendication 11, **caractérisée en ce que** la valeur prédéterminée est associée ou peut être associée à au moins un facteur de récolte et/ou d'environnement pouvant être sélectionné manuellement ou automatiquement, de préférence au moins la nature de la matière récoltée et/ou l'humidité de la matière récoltée.
